# FASCICULE DE BREVET EUROPEEN

(11) **EP 4 448 933 B1**
(45) Date de publication et mention de la délivrance du brevet: **04.02.2026**
(21) Numéro de dépôt: 22839873.1
(22) Date de dépôt: 07.12.2022
(51) Int. Cl.: F01D 9/04, F01D 17/16, F02C 9/20, F02C 9/52, F02K 3/075

(54) **TURBOMACHINE D'AÉRONEF**
FLUGZEUGTURBINENTRIEBWERK
AIRCRAFT TURBINE ENGINE

(30) Priorité: 17.12.2021 FR 2113845
(43) Date de publication de la demande: 23.10.2024
(73) Titulaire: SAFRAN AIRCRAFT ENGINES, 75015 Paris (FR)
(72) Inventeur: MARTINEZ LUQUE, Raul, 77550 MOISSY-CRAMAYEL (FR); GUEGAN, Damien Bernard Emeric, 77550 MOISSY-CRAMAYEL (FR); SECONDAT DE MONTESQUIEU, Antoine Claude Baudouin Raoul Marie, 77550 MOISSY-CRAMAYEL (FR); SOULAT, Laurent, 77550 MOISSY-CRAMAYEL (FR); SCHVALLINGER, Michaël Franck Antoine, 77550 MOISSY-CRAMAYEL (FR)
(74) Mandataire: Gevers & Orès
(86) Numéro de dépôt international: PCT/FR2022/052264
(87) Numéro de publication internationale: WO 2023/111424

(56) Documents cités:
- US-A- 5 261 227
- US-A1- 2011 171 007
- US-A1- 2016 201 608
- US-A1- 2019 078 536

## Description

### Domaine technique de l'invention

La présente invention concerne le domaine général de l'aéronautique. Elle vise plus particulièrement une turbomachine d'aéronef.

### Arrière-plan technique

L'arrière-plan technique comprend notamment les documents US-A1-2019/078536, US-A1-2016/2014608 et US-A1-2011/171007.

De manière conventionnelle, une turbomachine d'aéronef comprend un générateur de gaz comprenant le long d'un axe longitudinal au moins un compresseur, une chambre de combustion, et au moins une turbine.

Un flux d'air pénètre dans le générateur de gaz et est comprimé dans le ou les compresseurs. Ce flux d'air comprimé est mélangé à du carburant et brûlé dans la chambre de combustion puis les gaz de combustion sont détendus dans la ou les turbines. Cette détente provoque la rotation du ou des rotors de turbine, ce qui entraîne la rotation du ou des rotos de compresseur. Les gaz de combustion sont éjectés par une tuyère pour fournir une poussée qui peut s'ajouter à une poussée conférée par au moins une hélice ou soufflante de propulsion de la turbomachine.

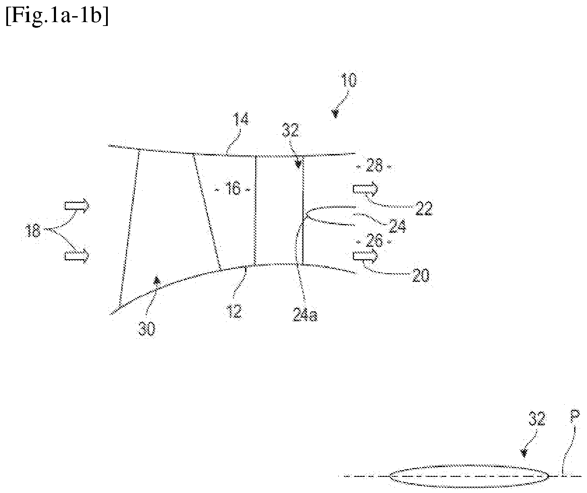

Les flux de gaz s'écoulent dans la turbomachine à travers des veines annulaires. Comme cela est visible à la figure 1a, la turbomachine 10 comprend ainsi des parois annulaires coaxiales, respectivement interne 12 et externe 14, s'étendant l'une autour de l'autre et définissant entre elles une veine annulaire principale 16 d'écoulement d'un flux de gaz principal 18. Dans le cas où le flux de gaz principal 18 doit être divisé en deux flux de gaz secondaires, respectivement interne 20 et externe 22, un séparateur annulaire 24 est disposé entre les deux parois 12, 14 et définit respectivement avec ces parois 12, 14 deux veines annulaires secondaires, respectivement interne 26 et externe 28, d'écoulement des flux de gaz secondaires 20, 22. Ce séparateur 24 comporte à une extrémité amont un bec annulaire 24a configuré pour séparer en deux le flux de gaz principal 18 et former les flux de gaz secondaires 20, 22.

Un aubage de rotor 30 peut s'étendre radialement à travers la veine principale 16, donc en amont du séparateur 24.

Comme illustré à la figure 1a, des bras structuraux 32 peuvent s'étendre radialement à travers la veine principale 16 en aval de l'aubage de rotor 30 et en amont du séparateur 24.

Dans la présente demande, on entend par bras 32 ou bras structural, un élément de stator qui a en section une forme générale aérodynamique telle que celle représentée à la figure 1b, mais qui ne comprend pas d'intrados ni d'extrados. Un bras 32 n'est donc pas comparable à une aube ou pale qui est elle profilée de façon à comprendre un intrados et un extrados. Un bras 32 présente en général une symétrie par rapport à un plan P passant par l'axe de la turbomachine. Le nombre de bras 32 est en général inférieur à 10 et peut être de 4. Au moins un des bras 32 peut être creux et de forme tubulaire dans la direction radiale pour être traversé par des servitudes et servir ainsi au passage de ces servitudes dans le moteur à travers les veines.

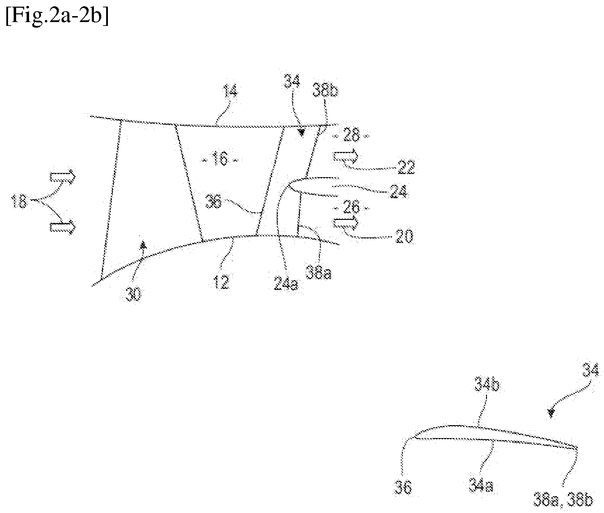

Pour certains types de turbomachine, tels que ceux à multiflux ou à cycle variable, il serait utile de disposer un aubage de stator 34 directement en aval de l'aubage de rotor 30 et intégré au bec 24a de séparation des flux à la place d'être positionné entre le rotor 30 et le séparateur 24 (cf. figure 2a), de manière à réduire la longueur du module entre le concept illustré sur la figure 1a et celui illustré sur la figure 2a. L'aubage de stator 34 comprendrait plusieurs aubes réparties autour de l'axe de la turbomachine. Comme évoqué dans ce qui précède et illustré à la figure 2b, chacune de ces aubes aurait en section un profil aérodynamique comportant un intrados 34a et un extrados 34b (figure 2b), donc un profil non symétrique ce qui n'est pas le cas du bras 32 visible sur la figure 1a. L'aubage de stator 34 s'étendrait radialement à travers la veine principale 16. Ces aubes comprendraient des bords d'attaque 36 situés en amont du bec 24a, dans la veine principale 16, et des bords de fuite, respectivement interne 38a et externe 38b, situés dans les veines interne 26 et externe 28. L'aubage de stator pourrait être relié au bec 24a.

L'aubage de stator 34 imposerait une direction particulière aux flux de gaz 16, 20, 22. Toutefois, dans le cas d'une turbomachine à cycle variable, il serait utile de prévoir une géométrie variable en aval de l'aubage de rotor 30 pour pouvoir s'adapter aux différents régimes de fonctionnement et variations de taux de dilution de la turbomachine. Cependant, pour des raisons d'encombrement, l'ajout d'un aubage à calage variable en aval de l'aubage de stator 34 peut être complexe. En effet, cet ajout nécessiterait de rallonger la dimension axiale de la turbomachine, ce qui se traduirait par une augmentation de la masse de la turbomachine et une diminution de ses performances.

De plus, pour des raisons de nuisance sonore, il ne serait pas non plus envisageable de rapprocher axialement l'aubage de stator 34 vers l'aubage de rotor 30.

Dans la présente demande, on entend par une turbomachine à cycle variable, une turbomachine dont la poussée spécifique peut être modifiée à un régime moteur donné, en contrôlant des géométries variables de la turbomachine. Un exemple de géométrie variable est un aubage de stator à calage variable. Dans la présente demande, on entend par aubage une rangée annulaire d'aubes.

L'invention propose ainsi d'optimiser une turbomachine telle qu'illustrée à la figure 2a de façon à pouvoir l'utiliser dans plusieurs configurations et notamment dans le cadre d'une turbomachine à plusieurs flux (au moins deux) et/ou d'une turbomachine à cycle variable.

### Résumé de l'invention

La présente invention propose une turbomachine d'aéronef, comportant un générateur de gaz comprenant le long d'un axe longitudinal au moins un compresseur, une chambre de combustion et au moins une turbine, la turbomachine comportant en outre :
- deux parois annulaires coaxiales, respectivement interne et externe, s'étendant l'une autour de l'autre et définissant entre elles une veine annulaire principale d'écoulement d'un flux d'air principal,
- un aubage de rotor s'étendant radialement à travers ladite veine principale,
- un séparateur annulaire disposé en aval de l'aubage de rotor et entre les deux parois, le séparateur définissant respectivement avec les parois interne et externe deux veines annulaires secondaires, respectivement interne et externe, d'écoulement de flux d'air secondaires, respectivement interne et externe, le séparateur comportant à une extrémité amont un bec annulaire configuré pour séparer en deux le flux d'air principal et former les flux d'air secondaires,
- des éléments de stator s'étendant radialement d'une part à travers ladite veine principale et d'autre part à travers lesdites veines secondaires, caractérisée en ce que lesdits éléments de stator comprennent des premières aubes de redresseur à calage variable qui sont réparties autour dudit axe et qui comportent chacune un bord d'attaque situé en amont dudit bec, et des bords de fuite, respectivement interne et externe, situés respectivement dans les veines secondaires interne et externe,
et en ce que la turbomachine comprend en outre des aubes de redresseur qui sont au moins en partie fixes et qui sont réparties autour dudit axe dans la veine secondaire externe et en aval des bords de fuite externes desdites premières aubes à calage variable.

La présente invention propose ainsi de mettre des aubes de redresseur à calage variable au niveau du bec de séparation. Pour autoriser le déplacement angulaire de ces aubes autour de leurs axes de calage, on comprend que les aubes seront séparées par de faibles jeux du bec et du séparateur, ceci afin de limiter les fuites de gaz dans ces zones.

Des aubes de redresseurs « fixes » sont associées aux aubes à calage variable et sont situées dans la veine secondaire externe. Cette configuration permet d'optimiser le fonctionnement de la turbomachine, en autorisant des applications multiflux ou à cycle variable, tout en limitant l'impact sur la longueur ou dimension axiale ainsi que la masse de la turbomachine. En effet, le fait de prévoir les aubes à calage variable au niveau du bec permet de réduire axialement la distance entre le rotor et le bec de séparation des flux tout en autorisant une modification des flux de gaz s'écoulant dans les veines secondaires interne et externe.

Les aubes de redresseur « fixes » peuvent être entièrement fixes ou comprendre chacune une partie fixe et une partie mobile et en particulier à calage variable. Chacune de ces aubes comprend par exemple une partie amont à calage variable comportant un bord d'attaque, et une partie aval fixe comportant un bord de fuite.

Dans la présente demande, on entend par « annulaire, une forme de révolution autour d'un axe, cette forme pouvant être continue ou interrompue. De plus, dans la présente demande, on entend par un élément « à calage variable », un élément dont au moins une partie a une position qui peut être ajustée autour d'un axe, qui est appelé axe de calage. L'intégralité de cet élément ou seulement une partie de cet élément peut être à calage variable. Dans le cas d'une aube par exemple, elle peut être monobloc et avoir une positon ajustable autour d'un axe de calage. En variante, elle pourrait comprendre qu'une partie seulement, comportant par exemple un bord d'attaque ou un bord de fuite, dont la position serait ajustable autour d'un axe de calage par rapport au reste de l'aube. Dans le cas d'un aubage comportant plusieurs aubes, chacune des aubes a une position ajustable autour d'un axe de calage qui lui est propre. Pour un même aubage, il y a donc autant d'axes de calage que d'aubes à calage variable. Chacun de ces axes peut avoir une orientation radiale ou inclinée par rapport à l'axe longitudinal de la turbomachine.

La turbomachine peut comprendre une ou plusieurs des caractéristiques suivantes, prises seules ou en combinaison les unes avec les autres :
- les éléments de stator comprennent en outre des secondes aubes de redresseur à calage variable qui sont situées dans ladite veine secondaire interne ;
- les secondes aubes à calage variable comprennent des bords d'attaque et des bords de fuite, les bords d'attaque de ces secondes aubes à calage variable étant situés directement en aval des bords de fuite interne des premières aubes à calage variable, et étant séparés par des jeux axiaux prédéterminés de ces bords de fuite ; les premières et secondes aubes à calage variable sont donc très rapprochées axialement les unes des autres de façon à ce qu'elles soient considérées comme un ensemble formant les éléments de stator au sens de l'invention ; les jeux axiaux précités entre ces aubes sont les plus faibles possibles de préférence. La minimisation de ces jeux axiaux permet de limiter voire d'empêcher le passage de gaz en fonctionnement entre les bords de fuite des premières aubes à calage variable et les bords d'attaque des secondes aubes à calage variable ; on comprend ainsi que les gaz qui s'écoulent sur les intrados des premières aubes à calage variable doivent s'écouler ensuite sur les intrados des secondes aubes à calage variable, et que les gaz qui s'écoulent sur les extrados des premières aubes à calage variable doivent s'écouler ensuite sur les extrados des secondes aubes à calage variable ; lorsque les jeux sont plus importants, une partie du flux de gaz s'écoulant sur les extrados des premières aubes à calage variable s'écoulent ensuite vers les intrados des secondes aubes et permet un apport d'énergie au fluide s'écoulant sur les intrados des premières aubes. ;

- les aubes de redresseur qui sont au moins en partie fixes comprennent des bords d'attaque séparés par des jeux axiaux prédéterminés desdits bords de fuite des premières aubes à calage variable ;
- lesdits jeux sont de préférence inférieurs à 10mm, plus préférentiellement inférieurs ou égaux à 5mm ;
- le nombre desdites secondes aubes à calage variable est égal au nombre desdites premières aubes à calage variable ;
- le nombre desdites secondes aubes à calage variable est égal à un nombre multiple desdites premières aubes à calage variable ;
- le nombre desdites aubes qui sont au moins en partie fixes est égal au nombre desdites premières aubes à calage variable ;
- le nombre desdites aubes qui sont au moins en partie fixes est égal et égal à un nombre multiple desdites premières aubes à calage variable ;
- la turbomachine comprend en outre au moins un système de commande du calage angulaire des aubes à calage variable ;
- ledit système de commande est monté dans ledit séparateur ou radialement à l'extérieur de ladite paroi externe ;
- au moins certaines desdites aubes qui sont au moins en partie fixes, ont des profils différents de ces autres aubes, et forment donc une grille d'aubes multiprofils ;
- l'aubage de rotor est une soufflante de propulsion ou un aubage de rotor de compresseur ; et
- les aubes de redresseur qui sont au moins en partie fixes sont entièrement fixes ;
- les aubes de redresseur qui sont au moins en partie fixes comprennent chacune une partie fixe et une partie mobile et en particulier à calage variable ; chacune de ces aubes comprend par exemple une partie amont à calage variable comportant un bord d'attaque, et une partie aval fixe comportant un bord de fuite ;
- lesdites aubes de redresseur qui sont au moins en partie fixes comprennent un intrados et un extrados, et lesdites aubes de redresseur à calage variable comprennent un intrados et un extrados.

La présente invention concerne également un aéronef, en particulier un avion de transport, comportant une turbomachine telle que décrite dans ce qui précède.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1a-1b] la figure 1a est une demi vue très schématique en coupe axiale d'une turbomachine d'aéronef, selon la technique antérieure à l'invention ; la figure 1b est une vue très schématique en coupe transversale d'un bras de la turbomachine de la figure 1a ;
[Fig.2a-2b] la figure 2a est une demi vue très schématique en coupe axiale d'une turbomachine d'aéronef ; la figure 2b est une vue très schématique en coupe transversale d'une aube de stator de la turbomachine de la figure 2a ;

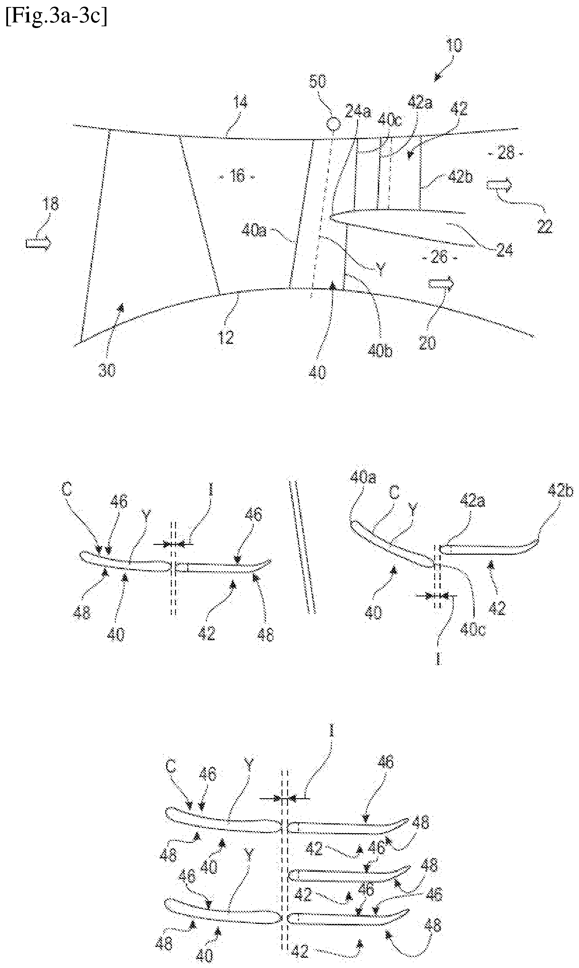

[Fig.3a-3c] la figure 3a est une demi vue très schématique en coupe axiale d'une turbomachine d'aéronef, selon un premier mode de réalisation de l'invention ; la figure 3b est une vue très schématique en coupe transversale d'une aube de redresseur à calage variable suivie d'une aube de redresseur fixe de la turbomachine de la figure 3a, et illustre, respectivement à gauche et à droite de la figure, deux positions distinctes de calage de l'aube de redresseur à calage variable ; la figure 3c est une vue similaire à celle de la figure 3b de gauche et montre une variante de réalisation de l'invention ;

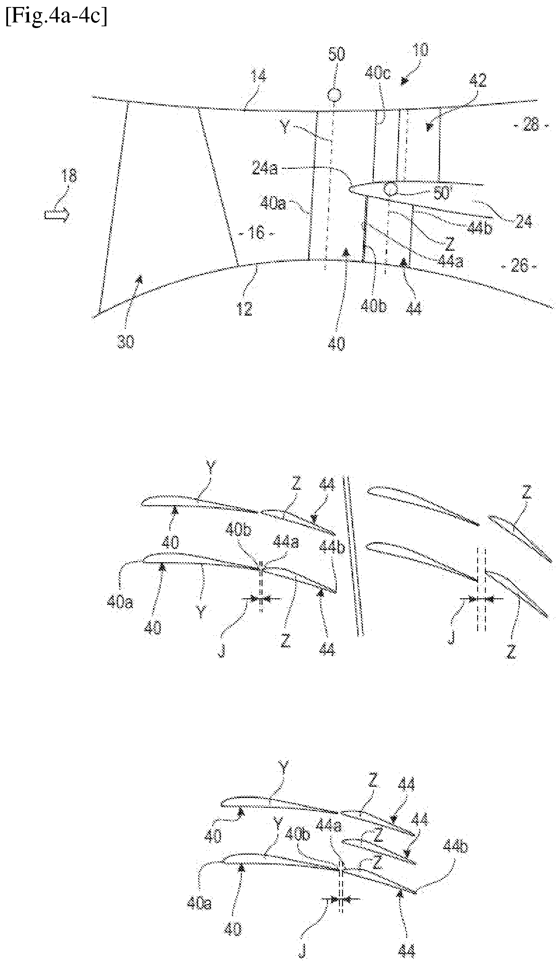

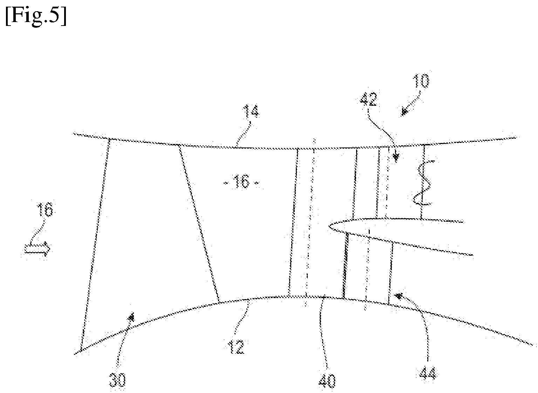

[Fig.4a-4c] la figure 4a est une demi vue très schématique en coupe axiale d'une turbomachine d'aéronef, selon un deuxième mode de réalisation de l'invention ; la figure 4b est une vue très schématique en coupe transversale d'une première aube de redresseur à calage variable suivie d'une seconde aube de redresseur à calage variable de la turbomachine de la figure 4a, et illustre, respectivement à gauche et à droite de la figure, deux positions distinctes de calage de ces aubes ; la figure 4c est une vue similaire à celle de la figure 4b de gauche et montre une variante de réalisation de l'invention ; et [Fig.5] la figure 5 est une demi vue très schématique en coupe axiale d'une turbomachine d'aéronef, selon un troisième mode de réalisation de l'invention dans lequel la grille de stators est composée d'au moins deux profils d'aubes différents.

### Description détaillée de l'invention

Les figures 1a, 1b, 2a et 2b ont été décrites dans ce qui précède.

Les figures 3a et 3b illustrent un premier mode de réalisation de l'invention.

De manière classique, la turbomachine 10 comporte un générateur de gaz (non représenté) comprenant le long d'un axe longitudinal au moins un compresseur, une chambre de combustion et au moins une turbine, la turbomachine.

La turbomachine 10 comprend deux parois annulaires coaxiales, respectivement interne 12 et externe 14, s'étendant l'une autour de l'autre et définissant entre elles une veine annulaire principale 16 d'écoulement d'un flux de gaz principal 18.

Le flux de gaz principal 18 est divisé en deux flux de gaz secondaires, respectivement interne 20 et externe 22, par un séparateur annulaire 24 qui est disposé entre les deux parois 12, 14. Ce séparateur 24 comporte à une extrémité amont un bec annulaire 24a configuré pour séparer en deux le flux de gaz principal 18 et former les flux de gaz secondaires 20, 22.

Un aubage de rotor 30 s'étend radialement à travers la veine principale 16, en amont du séparateur 24.

Des éléments de stator sont situés en aval de l'aubage de rotor 30 et au niveau du bec de séparation 24a.

Selon l'invention, ces éléments de stator comprennent des premières aubes de redresseur à calage variable 40.

Par ailleurs, des aubes de redresseur « fixes » 42 sont situées dans la veine secondaire externe 28 en aval des premières aubes de redresseur à calage variable 40.

Les premières aubes à calage variable 40 sont réparties autour de l'axe et comportent chacune un bord d'attaque 40a situé en amont du bec 24a, et des bords de fuite, respectivement interne 40b et externe 40c, situés respectivement dans les veines secondaires interne 26 et externe 28. On comprend ainsi que les premières aubes à calage variable 40 sont situées au niveau du bec 24a, comme cela est visible dans le dessin. Des jeux non visibles sont prévus entre le bec 24a et les premières aubes à calage variable 40 pour autoriser leur déplacement. Ces jeux sont de préférence les plus faibles possible pour limiter ou empêcher le passage de gaz entre ces aubes 40 et le nez 24a. Comme cela est également visible, les bords d'attaque 42a peuvent être inclinées et s'étendre d'amont en aval vers l'extérieur. Cette inclinaison est par exemple déterminée selon un compromis entre la taille du moteur et l'optimisation du bruit qu'il génère. Pour minimiser le bruit, il est préférable d'augmenter la hauteur en haut de pale, ce qui se traduit par une plus forte inclinaison de la pale.

La figure 3b montre que chacune des premières aubes à calage variable 40 a un profil aérodynamique et comprend un intrados 46 (de forme incurvée concave) et un extrados 48 (de forme incurvée convexe). Par ailleurs, chacune des premières aubes à calage variable présente une certaine courbure le long de sa corde. On désigne par C la zone de plus grande courbure d'une aube à calage variable 40. Cette zone est de préférence située en amont du bec 24a. Les premières aubes à calage variable 40 sont de préférence toutes identiques. Leurs bords d'attaque 40a sont de préférence traversés par un même plan transversal.

Le nombre des premières aubes à calage variable 40 est par exemple compris entre 10 et 200.

Chacune des premières aubes à calage variable 40 est mobile en rotation autour d'un axe de calage Y qui a une orientation sensiblement radiale. La rotation de chacune des premières aubes à calage variable 40 est obtenue grâce à un système de commande 50 qui est ici situé radialement à l'extérieur de la paroi externe 14. Ceci est avantageux car cela permet de localiser ce système dans un environnement relativement froid par rapport aux températures élevées qui peuvent régner dans le générateur de gaz. Par ailleurs, cet environnement est peu contraint et contient des espaces libres pour accueillir ce type de système.

Les aubes fixes 42 sont réparties autour de l'axe dans la veine secondaire externe 28. Elles comportent chacune un bord d'attaque 42a situé en aval du bec 24a, et un bord de fuite 42b situé dans la veine secondaire externe 28. La figure 3b montre que chacune des aubes fixes 42 a un profil aérodynamique et comprend un intrados 46 (de forme incurvée concave) et un extrados 48 (de forme incurvée convexe). Par ailleurs, chacune des aubes fixes 42 présente une certaine courbure le long de sa corde.

Les aubes fixes 42 peuvent être entièrement fixes ou comprendre chacune une partie fixe et une partie mobile et en particulier à calage variable. Chacune de ces aubes 42 comprend par exemple une partie amont à calage variable avec le bord d'attaque 42a, et une partie aval fixe avec le bord de fuite 42b. Ces parties sont schématiquement délimitées par des traits pointillés dans les figures.

Le nombre d'aubes fixes 42 est égal au nombre des premières aubes à calage variable 40 ou un nombre multiple des premières aubes à calage variable 40, et les aubes fixes 42 sont situées directement en aval des premières aubes à calage variable 40 et dans le prolongement axial de celles-ci. Les bords d'attaque 42a des aubes fixes 42 sont séparés par des jeux axiaux I prédéterminés des bords de fuite 40c des premières aubes à calage variable 40. De préférence, ces jeux I sont inférieurs à 10mm et plus préférentiellement inférieurs ou égaux à 5mm. De préférence, ces jeux I sont inférieurs à 10% de la corde d'une aube 40 ou d'une aube 42, et plus préférentiellement inférieurs ou égaux à 5% de cette corde. Chacun de ces jeux I est de préférence constant sur toute l'étendue radiale des bords 40c, 42a concernés et donc de la veine externe 28. Naturellement, ces jeux I sont susceptibles de varier en fonctionnement en fonction des positions de calage des aubes 40 par rapport aux aubes 42.

Les aubes fixes 42 sont de préférence toutes identiques. Leurs bords d'attaque 42a sont de préférence dans un même plan transversal ou traversés par un même plan transversal.

Le nombre d'aubes fixes 42 est par exemple compris entre 10 et 200.

La figure 3b montre à gauche une première position angulaire ou de calage des premières aubes à calage variable 40 et à droite une seconde position angulaire ou de calage de ces aubes. Les premières aubes à calage variable 40 peuvent par exemple être déplacées sur des plages angulaires de l'ordre de 60° autour de leurs axes Y.

La figure 4c illustre une variante de réalisation dans laquelle le nombre d'aubes fixes 424 est égal à un multiple du nombre des premières aubes à calage variable 40. Ce multiple est par exemple de 2, 3, 4, etc.

Les figures 4a et 4b illustrent un deuxième mode de réalisation de l'invention qui diffère du précédent mode de réalisation essentiellement en ce que la turbomachine comprend en outre des secondes aubes de redresseur à calage variable 44 situés dans la veine secondaire interne 26 en aval des bords de fuite 40b des premières aubes à calage variable 40.

Les secondes aubes à calage variable 44 comportent chacune un bord d'attaque 44a situé en aval du bec 24a, et un bord de fuite 44b situé dans la veine secondaire interne 26.

Chacune des secondes aubes à calage variable 44 a un profil aérodynamique et comprend un intrados et un extrados. Par ailleurs, chacune des aubes à calage variable 44 présente une certaine courbure le long de sa corde.

Le nombre des secondes aubes à calage variable 44 peut être égal au nombre des premières aubes à calage variable 40.

Les secondes aubes à calage variable 44 sont situées directement en aval des aubes fixes 42 et dans le prolongement axial de celles-ci. Les bords d'attaque 44a des secondes aubes à calage variable 44 sont séparés par des jeux axiaux J prédéterminés des bords de fuite 42c des aubes fixes 42. De préférence, ces jeux J sont inférieurs à 10mm et plus préférentiellement inférieurs ou égaux à 5mm. De préférence, ces jeux J sont inférieurs à 10% de la corde d'une aube 40 ou d'une aube 44, et plus préférentiellement inférieurs ou égaux à 5% de cette corde. Chacun de ces jeux J est de préférence constant sur toute l'étendue radiale des bords 40b, 44a concernés et donc de la veine interne 26. Naturellement, ces jeux J sont susceptibles de varier en fonctionnement en fonction des positions de calage des aubes 40, 44.

Les secondes aubes à calage variable 44 sont de préférence toutes identiques. Leurs bords d'attaque 44a sont de préférence situés dans un même plan transversal ou traversés par un même plan transversal.

Le nombre des secondes aubes à calage variable 44 est par exemple compris entre 10 et 200. Chacune des secondes aubes à calage variable 44 est mobile en rotation autour d'un axe de calage Z qui a une orientation sensiblement radiale. La rotation de chacune des secondes aubes à calage variable 44 est obtenue grâce à un système de commande 50' qui est ici situé dans le séparateur 24.

La figure 4c illustre une variante de réalisation dans laquelle le nombre d'aubes de redresseur à calage variable 44 est égal à un multiple du nombre des premières aubes à calage variable 40. Ce multiple est par exemple de 2, 3, 4, etc.

La figure 5 illustre un troisième mode de réalisation de l'invention qui diffère du précédent mode de réalisation essentiellement par le fait que les aubes fixes 42 ne sont pas toutes identiques. Les aubes fixes 42 sont au moins de deux types qui différent l'un de l'autre par leurs dimensions et/ou leurs géométries et/ou leurs cambrures, etc. Les différents types des aubes fixes 42 sont régulièrement répartis autour de l'axe de façon à obtenir une répartition cyclique de ces aubes 42 autour de l'axe.

De manière générale, la présente invention s'applique à toute turbomachine dans laquelle un flux principal est séparé en deux flux secondaires en aval d'un aubage de rotor caréné.

## Revendications

1. Turbomachine (10) d'aéronef, comportant un générateur de gaz comprenant le long d'un axe longitudinal au moins un compresseur, une chambre de combustion et au moins une turbine, la turbomachine comportant en outre :
- deux parois annulaires coaxiales, respectivement interne (12) et externe (14), s'étendant l'une autour de l'autre et définissant entre elles une veine annulaire principale (16) d'écoulement d'un flux d'air principal (18),
- un aubage de rotor (30) s'étendant radialement à travers ladite première veine (16),
- un séparateur annulaire (24) disposé en aval de l'aubage de rotor (30) et entre les deux parois (12, 14), le séparateur (24) définissant respectivement avec les parois interne et externe (12, 14) deux veines annulaires secondaires, respectivement interne (26) et externe (28), d'écoulement de flux d'air secondaires, respectivement interne (20) et externe (22), le séparateur (24) comportant à une extrémité amont un bec annulaire (24a) configuré pour séparer en deux le flux d'air principal (18) et former les flux d'air secondaires (20, 22),
- des éléments de stator s'étendant radialement d'une part à travers ladite veine principale (16) et d'autre part à travers lesdites veines secondaires (26, 28),
**caractérisée en ce que** lesdits éléments de stator comprennent des premières aubes de redresseur à calage variable (40) qui sont réparties autour dudit axe et qui comportent chacune un bord d'attaque (40a) situé en amont dudit bec (24a), et des bords de fuite, respectivement interne (40b) et externe (40c), situés respectivement dans les veines secondaires interne (26) et externe (28),
et **en ce que** la turbomachine (10) comprend en outre des aubes de redresseur (42) qui sont au moins en partie fixes et qui sont réparties autour dudit axe dans la veine secondaire externe (28) et en aval des bords de fuite externes (40c) desdites premières aubes à calage variable (40).

2. Turbomachine (10) selon la revendication 1, dans laquelle les éléments de stator comprennent en outre des secondes aubes de redresseur à calage variable (44) qui sont situées dans ladite veine secondaire interne (26).

3. Turbomachine (10) selon la revendication 2, dans laquelle les secondes aubes à calage variable (44) comprennent des bords d'attaque (44a) et des bords de fuite (44b), les bords d'attaque (44a) de ces secondes aubes à calage variable (44) étant situés directement en aval des bords de fuite interne (40b) des premières aubes à calage variable (40), et étant séparés par des jeux axiaux (J) prédéterminés de ces bords de fuite (40b).

4. Turbomachine (10) selon l'une des revendications précédentes, dans laquelle les aubes de redresseur (42) qui sont au moins en partie fixes comprennent des bords d'attaque (42a) séparés par des jeux axiaux (I) prédéterminés desdits bords de fuite (40c) des premières aubes à calage variable (40).

5. Turbomachine (10) selon la revendication 3 ou 4, dans laquelle lesdits jeux sont inférieurs à 10mm, et de préférence inférieurs ou égaux à 5mm.

6. Turbomachine (10) selon l'une des revendications 2 à 4, dans laquelle le nombre desdites secondes aubes à calage variable (44) est égal au nombre desdites premières aubes à calage variable (40) ou à un nombre multiple desdites premières aubes à calage variable (40).

7. Turbomachine (10) selon l'une des revendications précédentes, dans laquelle le nombre desdites aubes (42) qui sont au moins en partie fixes est égal au nombre desdites premières aubes à calage variable (40) ou à un nombre multiple desdites premières aubes à calage variable (40).

8. Turbomachine (10) selon l'une des revendications précédentes, dans laquelle elle comprend en outre au moins un système (50, 50') de commande du calage angulaire des aubes à calage variable (40).

9. Turbomachine (10) selon la revendication 7, dans laquelle ledit système de commande (50, 50') est monté dans ledit séparateur (24) ou radialement à l'extérieur de ladite paroi externe (14).

10. Turbomachine (10) selon l'une des revendications précédentes, dans laquelle au moins certaines desdites aubes (42) qui sont au moins en partie fixes, ont des profils différents de ces autres aubes (42).

11. Turbomachine (10) selon l'une des revendications précédentes, dans laquelle l'aubage de rotor (30) est une soufflante ou un aubage de rotor de compresseur.

12. Turbomachine (10) selon l'une des revendications précédentes, dans laquelle les aubes de redresseur qui sont au moins en partie fixes sont entièrement fixes.

13. Turbomachine (10) selon l'une des revendications 1 à 11, dans laquelle les aubes de redresseur qui sont au moins en partie fixes comprennent chacune une partie fixe et une partie mobile et en particulier à calage variable.

14. Turbomachine (10) selon la revendication 13, dans laquelle chacune des aubes de redresseur comprend par exemple une partie amont à calage variable comportant un bord d'attaque, et une partie aval fixe comportant un bord de fuite.

15. Turbomachine (10) selon l'une des revendications précédentes, dans laquelle lesdites aubes de redresseur qui sont au moins en partie fixes comprennent un intrados et un extrados, et lesdites aubes de redresseur à calage variable comprennent un intrados et un extrados

## Patentansprüche

1. Turbotriebwerk (10) für ein Luftfahrzeug, umfassend einen Gasgenerator, der entlang einer Längsachse mindestens einen Kompressor, eine Brennkammer und mindestens eine Turbine beinhaltet, wobei das Turbotriebwerk des Weiteren Folgendes umfasst:
- zwei koaxiale ringförmige Wände, jeweils intern (12) und extern (14), die sich umeinander herum erstrecken und zwischen ihnen eine ringförmige Hauptströmungsvene (16) eines Hauptluftflusses (18) definieren,
- eine Rotorbeschaufelung (30), die sich radial durch die erste Vene (16) erstreckt,
- einen ringförmigen Separator (24), der der Rotorbeschaufelung (30) nachgelagert und zwischen den zwei Wänden (12, 14) angeordnet ist, wobei der Separator (24), jeweils mit der internen und der externen Wand (12, 14), zwei sekundäre ringförmige Strömungsvenen, jeweils intern (26) und extern (28), von sekundären Luftflüssen, jeweils intern (20) und extern (22), definiert, wobei der Separator (24) an einem vorgelagerten Ende eine ringförmige Tülle (24a) umfasst, konfiguriert zum Trennen des Hauptluftstroms (18) in zwei und zum Bilden der sekundären Luftflüsse (20, 22),
- Statorelemente, die sich radial einerseits durch die Hauptvene (16) und andererseits durch die sekundären Venen (26, 28) erstrecken,
**dadurch gekennzeichnet, dass** die Statorelemente Leitschaufeln mit variabler Feststellposition (40) beinhalten, die um die Achse herum verteilt sind und die jeweils eine Anströmkante (40a), die sich der Tülle (24a) vorgelagert befindet, und Abströmkanten, jeweils intern (40b) und extern (40c), umfassen, die sich jeweils in der sekundären internen (26) und externen (28) Vene befinden,
und dadurch, dass das Turbotriebwerk (10) des Weiteren Leitschaufeln (42) beinhaltet, die mindestens zum Teil fest sind und die in der externen sekundären Vene (28) und den externen Abströmkanten (40c) der ersten Schaufeln mit variabler Feststellposition (40) nachgelagert um die Achse herum verteilt sind.

2. Turbotriebwerk (10) nach Anspruch 1, wobei die Statorelemente des Weiteren zweite Leitschaufeln mit variabler Feststellposition (44) beinhalten, die sich in der internen sekundären Vene (26) befinden.

3. Turbotriebwerk (10) nach Anspruch 2, wobei die zweiten Schaufeln mit variabler Feststellposition (44) Anströmkanten (44a) und Abströmkanten (44b) beinhalten, wobei die Anströmkanten (44a) dieser zweiten Schaufeln mit variabler Feststellposition (44) sich internen Abströmkanten (40b) der ersten Schaufeln mit variabler Feststellposition (40) direkt nachgelagert befinden und durch zwei vorbestimmte axiale Spiele (J) dieser Abströmkanten (40b) getrennt sind.

4. Turbotriebwerk (10) nach einem der vorstehenden Ansprüche, wobei die Leitschaufeln (42), die mindestens zum Teil fest sind, Anströmkanten (42a) beinhalten, die durch die vorbestimmten axialen Spiele (I) der Abströmkanten (40c) der ersten Schaufeln mit variabler Feststellposition (40) getrennt sind.

5. Turbotriebwerk (10) nach Anspruch 3 oder 4, wobei die Spiele kleiner als 10 mm und vorzugsweise kleiner als oder gleich 5 mm sind.

6. Turbotriebwerk (10) nach einem der Ansprüche 2 bis 4, wobei die Anzahl der sekundären Schaufeln mit variabler Feststellposition (44) gleich der Anzahl der ersten Schaufeln mit variabler Feststellposition (40) oder einem Vielfachen der ersten Schaufeln mit variabler Feststellposition (40) ist.

7. Turbotriebwerk (10) nach einem der vorstehenden Ansprüche, wobei die Anzahl der Schaufeln (42), die mindestens zum Teil fest sind, gleich der Anzahl der ersten Schaufeln mit variabler Feststellposition (40) oder einem Vielfachen der ersten Schaufeln mit variabler Feststellposition (40) ist.

8. Turbotriebwerk (10) nach einem der vorstehenden Ansprüche, wobei es des Weiteren mindestens ein Steuerungssystem (50, 50') der Winkelfeststellposition der Schaufeln mit variabler Feststellposition (40) beinhaltet.

9. Turbotriebwerk (10) nach Anspruch 7, wobei das Steuerungssystem (50, 50') in dem Separator (24) oder radial an der Außenseite der externen Wand (14) montiert ist.

10. Turbotriebwerk (10) nach einem der vorstehenden Ansprüche, wobei mindestens gewisse der Schaufeln (42), die mindestens zum Teil fest sind, Profile aufweisen, die sich von diesen anderen Schaufeln (42) unterscheiden.

11. Turbotriebwerk (10) nach einem der vorstehenden Ansprüche, wobei die Rotorbeschaufelung (30) ein Gebläse oder eine Kompressor-Rotorbeschaufelung ist.

12. Turbotriebwerk (10) nach einem der vorstehenden Ansprüche, wobei die Leitschaufeln, die mindestens zum Teil fest sind, vollständig fest sind.

13. Turbotriebwerk (10) nach einem der Ansprüche 1 bis 11, wobei die Leitschaufeln, die mindestens zum Teil fest sind, jeweils einen festen Teil und einen beweglichen Teil und insbesondere mit variabler Feststellposition beinhalten.

14. Turbotriebwerk (10) nach Anspruch 13, wobei jede der Leitschaufeln zum Beispiel einen vorgelagerten Teil mit variabler Feststellposition, der eine Anströmkante umfasst, und einen nachgelagerten festen Teil beinhaltet, der eine Abströmkante umfasst.

15. Turbotriebwerk (10) nach einem der vorstehenden Ansprüche, wobei die Leitschaufeln, die mindestens zum Teil fest sind, eine Laibung und eine Saugseite beinhalten, und die Leitschaufeln mit variabler Feststellposition eine Laibung und eine Saugseite beinhalten.

## Claims

1. An aircraft turbomachine (10), comprising a gas generator comprising along a longitudinal axis at least one compressor, a combustion chamber and at least one turbine, the turbomachine further comprising:
- two coaxial annular walls, respectively internal (12) and external (14), extending around each other and defining between them a main annular flow duct (16) for a main air flow (18),
- a rotor blading (30) extending radially across said first duct (16),
- an annular separator (24) arranged downstream of the rotor blading (30) and between the two walls (12, 14), the separator (24) defining, with the internal and external walls (12, 14) respectively, two secondary annular flow ducts, respectively internal (26) and external (28), of the secondary air flow, respectively internal (20) and external (22), the separator (24) comprising at an upstream end an annular splitter nose (24a) configured to split the main air flow (18) into two and to form the secondary air flows (20, 22),
- stator elements extending radially on the one hand through said main duct (16) and on the other hand through said secondary ducts (26, 28),
**characterised in that** said stator elements comprise first variable pitch straightener vanes (40) which are distributed around said axis and which each comprise a leading edge (40a) located upstream of said splitter nose (24a), and trailing edges, respectively internal (40b) and external (40c), located respectively in the internal (26) and external (28) secondary ducts,
and **in that** the turbomachine (10) further comprises straightener vanes (42) that are at least partly stationary and that are distributed about said axis in the external secondary duct (28) and downstream of the external trailing edges (40c) of said first variable pitch vanes (40).

2. The turbomachine (10) of claim 1, wherein the stator elements further comprise second variable pitch straightener vanes (44) that are located in said internal secondary duct (26).

3. The turbomachine (10) of claim 2, wherein the second variable pitch vanes (44) comprise leading edges (44a) and trailing edges (44b), the leading edges (44a) of these second variable pitch vanes (44) being located directly downstream of the internal trailing edges (40b) of the first variable pitch vanes (40), and being separated by predetermined axial clearances (J) from these trailing edges (40b).

4. The turbomachine (10) according to any of the preceding claims, wherein the straightener vanes (42) which are at least partly stationary comprise leading edges (42a) separated by predetermined axial clearances (I) from said trailing edges (40c) of the first variable pitch vanes (40).

5. The turbomachine (10) according to claim 3 or 4, wherein said clearances are less than 10mm, and preferably less than or equal to 5mm.

6. The turbomachine (10) according to any of claims 2 to 4, wherein the number of said second variable pitch vanes (44) is equal to the number of said first variable pitch vanes (40) or a multiple of said first variable pitch vanes (40).

7. The turbomachine (10) according to any of the preceding claims, wherein the number of said vanes (42) that are at least partly stationary is equal to the number of said first variable pitch vanes (40) or a multiple of said first variable pitch vanes (40).

8. The turbomachine (10) according to one of the preceding claims, wherein it further comprises at least one system (50, 50') for controlling the angular pitch of the variable pitch vanes (40).

9. The turbomachine (10) according to claim 7, wherein said control system (50, 50') is mounted within said separator (24) or radially outside said external wall (14).

10. The turbomachine (10) according to any of the preceding claims, wherein at least some of said vanes (42) which are at least partly stationary, have different profiles from those other vanes (42).

11. The turbomachine (10) according to any of the preceding claims, wherein the rotor blading (30) is a fan or a compressor rotor blading.

12. The turbomachine (10) according to any of the preceding claims, wherein the straightener vanes which are at least partly stationary are fully stationary.

13. The turbomachine (10) according to any of claims 1 to 11, wherein the straightener vanes which are at least partly stationary comprise each a stationary portion and a movable portion and particularly with variable pitch.

14. The turbomachine (10) according to claim 13, wherein each of the straightener vanes comprises for example an upstream portion with variable pitch including a leading edge, and a stationary downstream portion comprising a trailing edge.

15. The turbomachine (10) according to any of the preceding claims, wherein said straightener vanes which are at least partly stationary comprise an intrados and an extrados, and said variable pitch straightener vanes comprise an intrados and an extrados.
